# EUROPÄISCHE PATENTSCHRIFT

(11) **EP 1 347 810 B1**
(45) Veröffentlichungstag und Bekanntmachung des Hinweises auf die Patenterteilung: **29.08.2018**
(21) Anmeldenummer: 01983599.0
(22) Anmeldetag: 22.11.2001
(51) Int. Cl.: H04N 21/4335, A63F 13/32, A63F 13/95, A63F 13/533

(54) **TELEKOMMUNIKATIONSSYSTEM, INSBESONDERE ZUM ÜBERTRAGEN VON SOFTWAREPROGRAMMEN SOWIE EIN GEEIGNETES VERFAHREN HIERZU UND EINE EINSCHUBKASSETTE**
TELECOMMUNICATION SYSTEM, PARTICULARLY FOR TRANSFERRING SOFTWARE PROGRAMS, ADAPTED METHOD AND SLIDE-IN CASSETTE
SYSTEME DE TELECOMMUNICATION, EN PARTICULIER POUR LA TRANSMISSION DE LOGICIELS, ET PROCEDE ADAPTE, AINSI QUE CASSETTE INSERABLE

(30) Priorität: 28.12.2000 DE 10065471
(43) Veröffentlichungstag der Anmeldung: 01.10.2003
(73) Patentinhaber: Telefónica Germany GmbH & Co. OHG, 80992 München (DE)
(72) Erfinder: KERN, Thomas, 80639 München (DE); KRANZ, Martin, 81543 München (DE)
(74) Vertreter: Herrmann, Uwe
(86) Internationale Anmeldenummer: PCT/EP2001/013607
(87) Internationale Veröffentlichungsnummer: WO 2002/053245

(56) Entgegenhaltungen:
- WO-A-01/26761
- DE-U- 29 922 084
- US-A- 6 029 046
- PATENT ABSTRACTS OF JAPAN vol. 2000, no. 03, 30. März 2000 (2000-03-30) & JP 11 333141 A (MITSUBISHI PENCIL CO LTD), 7. Dezember 1999 (1999-12-07)

## Beschreibung

Die vorliegende Erfindung betrifft ein Telekommunikationssystem und ein geeignetes Verfahren zum Betreiben des Telekommunikationssystems sowie eine hierfür vorgesehene Einschubkassette.

Bislang arbeiten herkömmliche Telekommunikationssysteme mit mobilen Funkstationen beispielsweise in Form von Mobiltelefonen, wobei mit herkömmliche WAP-Techniken Softwareprogramme über die mobilen Funkstationen benutzt werden. Hierbei verwendet die mobile Funkeinheit lediglich eine Displayeinstellung, so dass keine weiteren Animationen möglich sind, welches einem steigenden Bedürfnis an Abwechslung dem Nutzer nicht gerecht wird. Das Softwareprogramm als solches wird nicht auf die mobile Funkstation geladen.

Es ist ferner bekannt, mobile Funkstationen, beispielsweise Mobiltelefone, derart vorzubereiten, dass beispielsweise bei einer bestehenden Software, welche mit dem Mobilfunkgerät ausgeliefert wird, durch Herunterladen von Dateien bzw. speziell abgestimmte Datenformate, eine gewisse Änderung der Animation möglich ist. Derartige auf den Mobilfunkstationen vorhandene Spielsoftware sind unter dem Begriff "Embedded Games" bekannt. Ebenfalls im Handel erhältlich sind Systeme, bei denen mehrere Nutzerkonsolen funktechnisch zusammenschaltbar sind, um somit ein Multi-Player-System bereitzustellen. Hierbei kommunizieren die jeweils mit der Spielsoftware vorgesehenen Mobiltelefone, wobei hier jedoch lediglich ein spezielles Datenformat übertragen wird, jedoch wie in allen anderen bekannten Fällen kein komplettes Softwareprogramm.

Nachteilig an dem oben genannten System ist beispielsweise, dass die normalerweise für die Telephonie ausgestatteten Mobiltelefone bzw. der mobilen Funkstation nicht die auf die jeweiligen Softwareprogramme ausgestatteten Bedienungselemente haben. Darüber hinaus erfordern die herkömmlichen Systeme jeweils eine mobile Funkstation bzw. ein Mobiltelefon, welche ständig aktiviert sein müssen, und somit für eine weitere Nutzung während der Benutzung des Softwareprogramms nicht in Frage kommen. Darüber hinaus können die herkömmlichen Systeme keine geeignete Plattform bzw. keine geeignete Displayanzeige bereitstellen. Ferner verfügen die auf die für die Sprachübertragung ausgestattete Mobiltelefone nur über eine eingeschränkte Technik, d. h., die Erweiterungsmöglichkeiten auf weitere Anwendungen, beispielsweise das Betreiben von Spielen bzw. spezieller Softwareprogrammen, ist nicht möglich. Alles in allem lässt die Bedienungsfreundlichkeit somit zu wünschen übrig. Wird darüber hinaus, wie beim herkömmlichen System vorgesehen, ein spezieller WAB-Browser zum Betreiben des speziellen Softwareprogramms eingesetzt, so muss ständig während des Betreibens des speziellen Softwareprogramms eine Funkverbindung, beispielsweise der mobilen Funkstation mit der Vermittlungseinheit vorhanden sein, so dass der jeweilige Nutzer unerreichbar bleibt.

Demgegenüber existieren bekannte Nutzerkonsolen, welche eine spezielle Einschubkassette verwenden, auf der ein Softwareprogramm gespeichert ist. Besteht nunmehr bei dem Nutzer der Wunsch unterschiedliche Softwareprogramme abrufen zu wollen, so wird vom Hersteller der Nutzerkonsole angeboten, jeweils die gewünschten Softwareprogramme durch Austausch der Einschubkassette aktivieren zu können. Auf diese Weise hat der Hersteller der Nutzerkonsole zukünftig ferner die Möglichkeit weitere Entwicklungen bzw. andere Softwareprogramme lediglich durch Bereitstellen der Einschubkassette dem Nutzer anzubieten. Nachteilig an dem System ist jedoch, dass zum einen der Nutzer eine Vielzahl von Einschubkassetten ständig zugriffsbereit haben muss, um je nach Wunsch die Softwareprogramme abrufen zu können. Auch ist im Zuge der heutigen weiteren Entwicklungen es üblich, dass die Begeisterung der Nutzer für ältere Softwareprogramme ziemlich schnell nachlässt, so dass sich die Anzahl der Einschubkassetten in kürzester Zeit auf ein unüberschaubares Maß erhöht.

Demgegenüber ist es Aufgabe der vorliegenden Erfindung, die oben genannten Nachteile des Standes der Technik zu meiden. Ferner ist es Aufgabe der vorliegenden Erfindung, ein Telekommunikationssystem, ein Verfahren zum Betreiben des Telekommunikationssystems sowie eine dafür geeignete Einschubkassette bereitzustellen, mit der eine erhöhte Nutzerfreundlichkeit gegeben ist, spezielle Softwareprogramme über mobile Funkstationen abspielbar zu gestalten', sowie den Datentransfer auf ein Minimum zu reduzieren.

Die JP11333141A offenbart ein System, bei der ein Mobilfunkgerät über einen Verbindungsadapter mit einer Nutzerkonsole verbunden wird, um Spieleanwendungen über ein Mobilfunknetz auf die Nutzerkonsole herunterzuladen. Ein ähnliches System wird durch die JP 11203127 offenbart, bei der Spieleanwendungen direkt auf ein Mobilfunkgerät herunterladbar sind und durch dieses ausführbar sind. Alternativ können Spieleanwendungen auch in Form einer Kassette erworben werden, die in einen entsprechenden Einschubschacht des Mobilfunkgerätes einsteckbar ist.

Weitere gattungsgemäße Systeme sind aus der DE 299 22 084 U, EP 0 941 753 A als auch US 6,029,046 bekannt.

Anmeldungsgemäß werden diese Aufgaben vorrichtungstechnisch mit den Merkmalen des Anspruchs 1 und/oder des Anspruchs 21 sowie verfahrenstechnisch mit den Merkmalen des Anspruchs 12 gelöst.

Anmeldungsgemäß wird somit ein Telekommunikationssystem bzw. ein Verfahren zum Betreiben des Telekommunikations systems zur Verfügung gestellt, wobei das Telekommunikationssystem aus einer Vermittlungseinheit zum Bereitstellen eines Softwareprogramms, zumindest aus einer der Vermittlungseinheit zugeordneten mobilen Funkstation und einer speziell für das Softwareprogramm konfigurierten Nutzerkonsole besteht. Mit diesen Komponenten wird erreicht, dass die mobilen Funkstationen nur für die Zeit beansprucht werden bzw. nicht erreichbar sind, die für die Übertragung des
Softwareprogramms von der Vermittlungseinheit zur Nutzerkonsole benötigt wird. Nach der Übertragung steht dem Nutzer das gewünschte Softwareprogramm zur Verfügung und gleichzeitig ist der Nutzer selbst weiterhin über die mobile Funkstation erreichbar. Mit diesem System ist es somit möglich, gezielt lediglich die Softwareprogramme abzurufen, die derNutzer über seine Nutzerkonsole verwenden möchte.

Auf diese Weise wird vermieden, dass eine Vielzahl von Einschubkassetten - wie im Stand der Technik - ständig bereit gehalten werden müssen. Ferner kann mit dem anmeldungsgemäßen System gewährleistet werden, dass die Aktualisierung der Softwareprogramme unproblematisch den Nutzern zur Verfügung gestellt werden kann, so dass das Gesamtsystem auch als umweltfreundlich angesehen werden kann. Auch kann anmeldungsgemäß eine Abwärtskompatibilität hinsichtlich der Softwareprogramme bereitgestellt werden. Hervorzuheben ist, dass eine funktechnische Verbindung zwischen der Nutzerkonsole und der Vermittlungseinheit lediglich für den Zeitraum zur Verfügung gestellt werden muss, der für die Datenübertragung des Softwareprogramms benötigt wird. Mit dem anmeldungsgemäßen Telekommunikationssystem bzw. mit dem Verfahren zum Betreiben des Telekommunikationssystems wird somit auch die Möglichkeit einer verbesserten Vergebührung bei der Verwendung spezieller Softwareprogramme bereitgestellt. Denn aufgrund jedes Verbindungsaufbaus kann somit die Vermittlungseinheit gezielt eine Vergebührung vornehmen, welche wiederum dem Nutzer lediglich die Verwendung des Herunterladens des Softwareprogramms in Rechnung stellt, ohne dass der Nutzer den Gesamtpreis für das Softwareprogramm zahlen muss, welches herkömmlicher Weise, beispielsweise in der Einschubkassette, oder aber über bekannte Datenträger zur Verfügung gestellt wird.

Weitere vorteilhafte Ausgestaltungen der vorliegenden Erfindung sind Gegenstand der Unteransprüche.

Wird die Nutzerkonsole mit einem ersten Speicherelement, vorzugsweise einem RAM-Modul, versehen, in dem das Softwareprogramm temporär abspeicherbar ist, so ist eine gezielte Vergebührung durchführbar. Darüber hinaus wird der immer weiter um sich greifender Produktpiraterie entgegengewirkt, denn aufgrund der temporären Speicherung des Softwareprogramms wird größtenteils ausgeschlossen, dass ein normaler Nutzer, die Softwareprogramme kopieren kann.

Weist die Nutzerkonsole die mobile Funkstation einer aufeinander abgestimmten Schnittstelle auf, welche vorzugsweise eine serielle Schnittstelle oder eine Infrarot-Schnittstelle sein kann, so ist die Möglichkeit gegeben, auf herkömmliche Weise die Softwareprogramme über die mobile Funkstationen zu übertragen, ohne dabei eine hardwarespezifische Abänderung vornehmen zu müssen.

Weist die Nutzerkonsole ein zweites Speicherelement mit einem Betriebssoftwareprogramm auf, so wird durch das Vorhandensein der Betriebssoftware gewährleistet, dass die übertragenen Softwareprogramme gezielt auf die Nutzerkonsole abgestimmt sind. Es hat sich als vorteilhaft erwiesen, wenn die Nutzerkonsole eine separierbare Einrichtung aufweist, welche das erste Speicherelement, das zweite Speicherelement und die Schnittstelle enthält, um somit zwischen unterschiedlichen Nutzerkonsolen, welche speziell für die separierbare Einrichtung konstruiert sind, ausgetauscht zu werden.

Ist darüber hinaus die separierbare Einrichtung der Nutzerkonsole formgleich mit einer für den Austausch üblicherweise vorgesehene Einschubkassetten mit Softwareprogrammen der Nutzerkonsole konstruiert, so besteht die Möglichkeit, handelsübliche Nutzerkonsolen, welche speziell vorgesehene Einschubkassetten verwenden, ebenfalls in dem anmeldungsgemäßen Telekommunikationssystem zu verwenden. Mit anderen Worten, sollten bereits Nutzer eine Nutzerkonsole mit Einschubkassette besitzen, so muss lediglich die anmeldungsgemäße Einschubkassette herangezogen werden, um ebenfalls von den ständig, teilweise notwendigen Aktualisierungen profitieren zu können. Und zwar derart, dass zukünftig keine weitere Einschubkassette erworben werden muss, sondern lediglich über die mobile Funkstation eine Verbindung mit der Vermittlungseinheit aufgebaut werden muss, um die aktualisierten Softwareprogramme zu der Nutzerkonsole zu übertragen.

Weist darüber hinaus die Nutzerkonsole oder die separierbare Einrichtung ein Verwaltungselement auf, welches mit einem dritten Speicherelement, vorzugsweise RAM-Modul, in Verbindung steht, so können teilweise die für das Softwareprogramm benötigten Daten zwischengespeichert bzw. temporär abgespeichert werden und ggf. je nach verwendetem Softwareprogramm wieder der Nutzerkonsole zur Verfügung gestellt werden. Im Falle von einer Spielsoftware als Softwareprogramm eignet sich das Verwaltungselement mit Speicherelement dazu, einzelne Kenngrößen wie Spielstände bzw. Grunddaten, die zu einem späteren Zeitpunkt für das Softwareprogramm zur Verfügung gestellt werden muss, bereitzustellen.

Für ein reibungsloses bzw. funktionstüchtiges Arbeiten mit dem anmeldungsgemäßen Telekommunikationssystem hat es sich als Vorteil herausgestellt, wenn das Betriebssoftwareprogramm als Minimalausstattung eine Betriebskomponente, eine Auswahlkomponente, eine Verbindungskomponente, eine Emulatorkomponente und/oder eine Programmkomponente aufweist. Mit diesen Komponenten wird gewährleistet, dass es für den Nutzer keinen weiteren programmiertechnischen Aufwand bedeutet, aktualisierte Softwareprogramme in der Nutzerkonsole zu betreiben.

Hierbei hat es sich als vorteilhaft herausgestellt, wenn die Betriebskomponente das erste Speicherelement und/oder die Schnittstelle verwaltet, die Auswahlkomponente, das graphische Interface zum Nutzer darstellt und virtuelle Schaltflächen generiert, die Verbindungskomponente den Zugriff auf einen zentralen Server der Vermittlungseinheit ermöglicht und den Datentransfer des Softwareprogramms zwischen der Verbindungseinheit und mobiler Funkstation koordiniert, die Emulatorkomponente als Mittler zwischen dem Softwareprogramm und Nutzerkonsule fungiert und/oder die Programmkomponente das Ausführen des Softwareprogramms verwaltet.

Wie bereits angedeutet, hat sich das anmeldungsgemäße Telekommunikationssystem bzw. anmeldungsgemäße Verfahren besonders für die Nutzer als geeignet herausgestellt, die häufig ein Spielprogramm als Softwareprogramm verwenden und die Nutzerkonsole in Form einer Spielkonsole verwenden, da insbesondere spezielle ausgestattete bzw. konfigurierte Spielkonsolen dem Bedürfnissen des Nutzers gerecht werden, d. h. es gibt spezielle Funktionselemente, wie Taster bzw. Joysticks, die das Ausführen von Spielprogramme bestmöglich unterstützen.

Da herkömmlicher Weise zwischenzeitlich Mobiltelefone als mobile Funkeinheiten weit verbreitet sind, eignen sich diese Mobiltelefone bestmöglich zum Einsatz in dem anmeldungsgemäßen Telekommunikationssystems bzw. in dem Verfahren zum Betreiben des Telekommunikationssystems.

Aufgrund der Konfiguration des Telekommunikationssystems ist es ferner von Vorteil, wenn die Nutzerkonsole durch die Möglichkeit, Softwareprogramme über eine mobile Funkstation zu laden, damit ausgestattet werden, von der Nutzerkonsole über die mobile Funkstation das Abrufen der in der Vermittlungseinheit vorliegenden Softwareprogramme herbeizuführen. Dem gegenüber wird dem Nutzer durch die ihm bekannte Nutzerkonsole auch die Möglichkeit gegeben, lediglich durch Anwahl einer Nummer über die mobile Funkstation, mittels der Schnittstelle die Nutzerkonsole zu aktivieren, und über ein spezielles Auswahlmenü innerhalb der Nutzerkonsole die Übertragung des Softwareprogramms zu aktivieren.

Wird das Softwareprogramm mit dem Ausschalten der Nutzerkonsole aus dem ersten Speicherelement gelöscht, wird gewährleistet, dass bei einem darauffolgenden Anschalten der Nutzerkonsole stets die gleichen Anfangsbedingungen vorliegen und insbesondere wird die Möglichkeit beschaffen, kontrolliert den Austausch der Softwareprogramme durchzuführen.

Weitere vorteilhafte Ausgestaltungen der vorliegenden Erfindung sind Gegenstand der übrigen Unteransprüche.

Anhand der beigefügten Zeichnung wird ein Ausfuhrungsbeispiel des anmeldungsgemäßen Systems bzw. der anmeldungsgemäßen Einschubkassette dargestellt.

Es zeigen
- Fig. 1: das Zusammenwirken zwischen der mobilen Funkstation und der Nutzerkonsole gemäß einer Ausführungsform des Telekommunikationssystems; und
- Fig. 2: den Aufbau der anmeldungsgemäßen Einschubkassette, welche in dem System gemäß Fig. 1 verwendet wird.

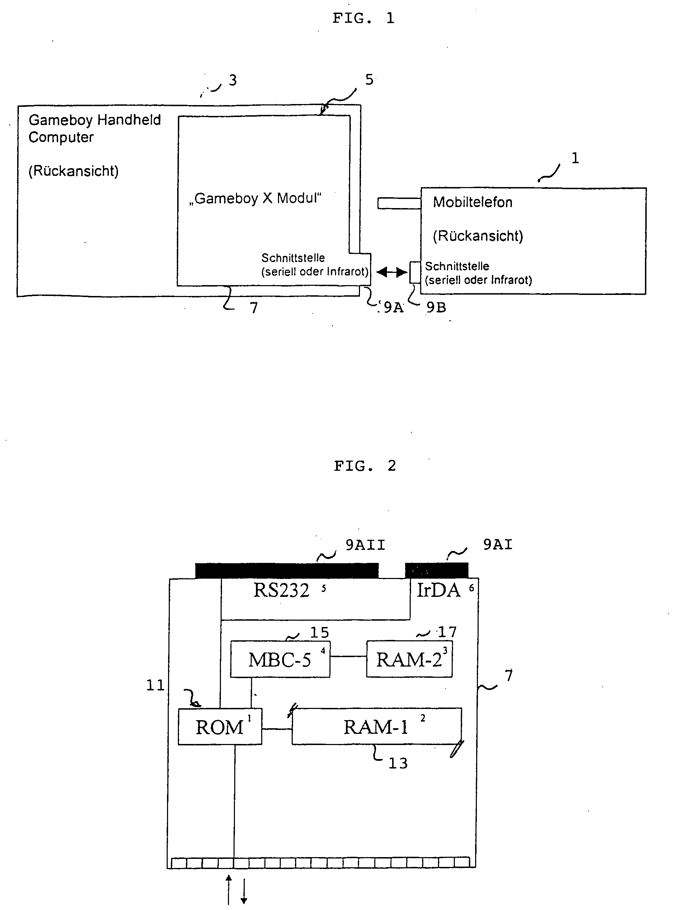

Fig. 1 zeigt eine mobile Funkstation 1, welche in dieser Ausführungsform als Mobiltelefon dargestellt ist. Zusätzlich ist eine Nutzerkonsole 3 dargestellt, welche eine separierbare Einrichtung 5 aufweist, die in dieser Form als Einschubkassette 7 wiedergegeben ist. Ebenso deutlich ist zu sehen, dass die Einschubkassette 7 mit der mobilen Funkeinheit 1 über die Schnittstelle kommuniziert (siehe Rechts-links-Pfeil). Optional kann die Schnittstelle entweder als ein serielle Schnittstelle oder eine Infrarotschnittstelle ausgestattet sein. Die mobile Funkstation 1 kommuniziert mit einer Vermittlungseinheit (nicht gezeigt), die das zu übertragende Softwareprogramm enthält.

In Fig. 2 sind die jeweiligen Bauelemente der Einschubkassette 7 dargestellt, welche in dieser Ausführungsform sowohl die serielle (9A II) und die infrarote (9A I) Schnittstelle aufweist. Die jeweiligen Schnittstellen sind mit dem zweiten Speicherelement 11 verbunden, welches in dieser Ausführungsform als ROM-Modul ausgestattet ist. In dem zweiten Speicherelement ist das Betriebssoftwareprogramm integriert, welches die jeweiligen Komponenten enthält. Das zweite Speicherelement ist mit dem ersten Speicherelement 13 verbunden, in dem anmeldungsgemäß das Softwareprogramm temporär abspeicherbar ist. Für diesen Zweck ist das erste Speicherelement als RAM-Modul wiedergegeben. Je nach Gegebenheit ist ferner ein Verwaltungselement 15 vorgesehen, welches mit einem dritten Speicherelement 17, welches vorzugsweise ebenfalls als RAM-Modul ausgebildet ist, verbunden. Das Verwaltungselement mit drittem Speicherelement ist jedoch nur optional notwendig. Das zweite Speicherelement 11 steht ferner mit einem Ausgang in Verbindung, welcher standardisiert zwischen der separierbaren Einrichtung bzw. Einschubkassette und der Nutzerkonsole ausgebildet ist, um auf herkömmliche Weise mit der Nutzerkonsole zu kontaktieren.

Nachfolgend soll detaillierter die Funktionsweise des anmeldungsgemäßen Telekommunikationssystems und die speziellen Bauelemente sowie das Verfahren zum Betreiben des Telekommunikationssystems beschrieben werden.

Das zweite Speicherelement beinhaltet ein speziell angefertigtes und auf die Nutzerkonsole abgestimmtes Betriebssoftwareprogramm, welches bei Inbetriebnahme der Nutzerkonsole als erstes Element gestartet wird und die modulinternen Hardwarekomponenten bzw. -elementen ansteuert. Dieses spezielle Betriebssoftwareprogramm ist ferner auch für den reibungslosen Ablauf jedes übertragenen Softwareprogramms, beispielsweise Spielprogramm, zuständig. Auf dem ersten Speicherelement 13 wird das jeweils aus dem Internet heruntergeladene bzw. übertragene Softwareprogramm temporär gespeichert und bleibt bis zum Deaktivieren der Nutzerkonsole für den Nutzer verfügbar. Damit der Nutzer das gespeicherte Softwareprogramm bzw. Spielprogramm spielen kann, wird es von der CPU der Nutzerkonsole ausgeführt. Das erste Speicherelement ist von der Speicherkapazität so ausgelegt, das jedes verfügbare, für die Nutzerkonsole bestimmte Softwareprogramm bzw. Spielprogramm aufgenommen werden kann. Das hinsichtlich der Speicherkapazität gegenüber dem ersten Speicherelement kleinere dritte Speicherelement ist eine Modulkomponente, die es möglich macht, gewisse Kenngrößen wie Spielestand eines Spielsoftwareprogramms beispielsweise Spielprogramms zu sichern, sofern es eine softwareinterne Funktion und das jeweilige Softwareprogramm vorsieht. Das dritte Speicherelement wird nach dem Ausschalten nicht mehr mit Strom versorgt, so dass die Kenngrößen mit dem Abschalten ebenfalls gelöscht werden. Damit steht die Ressource bei jedem Einschalten für ein neues Softwareprogramm bzw. -spiel unbelegt zur Verfügung. Das Verwaltungselement 15 ist eine Standardkomponente hinsichtlich spezieller Softwareprogramme bzw. Spielprogramme. Das Verwaltungselement 15 ist dafür zuständig, bestimmte Kenngrößen, wie beispielsweise eine bestimmte Übergröße an Kenndaten und Speicherplatzanforderungen zu verwalten und im dritten Speicherelement korrekt abzulegen. Dieses lediglich optionale Bauelement kann jedoch somit wichtiger Bestandteil hinsichtlich der universellen Kompatibilität von Nutzerkonsolen mit bestehender Softwareprogramme bzw. Spielsoftwareprogrammen sein. Die RS232-Schnittstelle ist als serielle Schnittstelle für die notwendige Datenverbindung mit der mobilen Funkstation bzw. Mobiltelefon vorgesehen. Der Datenaustausch wir in diesem Fall per Kabel vorgenommen. Die Infrarotschnittstelle 9A I ist eine alternative Schnittstelle zu dem drahtlosen Datenaustausch der mobilen Funkstation bzw. Mobiltelefon. Grundsätzlich sei hier angemerkt, dass der Nutzer die spezifische Übertragung mit dem Betriebssoftwareprogramm auf dem zweiten Speicherelement selbst steuern kann. Das in dem anmeldungsgemäßen Telekommunikationssystem enthaltene Betriebssoftwareprogramm ist aufgrund einer erforderlichen Kompatibilität bzw. universellen Kompatibilität umfangreicher als die Betriebssoftware einer herkömmlichen Nutzerkonsole.

Während auf der normalen Nutzerkonsole lediglich das auszuführende Softwareprogramm gespeichert ist, umfasst das anmeldungsgemäße Betriebssoftwareprogramm speziellere Komponenten. Die Betriebskomponente dient dazu, andere Softwaremodule zu initialisieren, das erste Speicherelement zu verwalten bzw. die Schnittstellen (seriell und/oder infrarot) anzusprechen. Die Auswahlkomponente stellt das grafische Interface zum Nutzer dar. Sie ermöglicht die Anzeige von Informationen, und zwar Informationen über verfügbare Softwareprogramme, und generiert virtuelle Schaltflächen, beispielsweise die Bestätigung der Übertragungsinitialisierung. Die Verbindungskomponente ermöglicht den Zugriff auf einen zentralen Server der Vermittlungseinheit, auf dem die Softwareprogramme und auch eventuell Dateien abgelegt sind und koordiniert den Datentransfer, d. h. Initiierung, Durchführung und Kontrolle der empfangenen Softwareprogrammdaten zwischen Vermittlungseinheit und mobiler Funkstation. Die Emulator-Komponente fungiert als Mittler zwischen dem Softwareprogramm und der Nutzerkonsole, d. h. fungiert als Mittler zwischen dem auf dem ersten Speicherelement abgelegten Softwareprogramm und der ausführenden Komponente der Nutzerkonsole, d. h. CPU, RAM usw. Die Programmkomponente verwaltet das Ausführen des Softwareprogramms und im Falle eines Spielprogramms verwaltet die Programmkomponente das eigentliche Softwareprogramm bzw. Spielprogramm, das nach dem Einschalten der Nutzerkonsole auf die Einschubkassette geladen werden muss, um gespielt zu werden.

Mit der nachfolgenden Prozessschreibung soll die Funktionsweise des anmeldungsgemäßen Telekommunikationssystems anschaulich dargestellt werden.

Im ersten Schritt schaltet der Nutzer die Nutzerkonsole ein, wobei in dem bevorzugten Ausfuhrungsbeispiel die Einschubkassette in dem bereits vorgesehenen Bereich der Nutzerkonsole steckt. Die Hardware der Nutzerkonsole greift standardmäßig auf den permanenten Speicher, d. h. zweites Speicherelement der Einschubkassette, zu, in dem sich das Betriebssoftwareprogramm befindet und führt dieses Betriebssoftwareprogramm aus.

Im zweiten Schritt wird ein Begrüßungsdialog und ein Auswahlmenü angezeigt. Die Betriebskomponente initiiert unmittelbar die Auswahlkomponente. Auf dem Display der Nutzereinheit erscheint eine kurze Begrüßung und eine virtuelle Schaltfläche wird generiert, welche signalisiert, dass nunmehr eine Verbindung zwischen der Nutzerkonsole und der Vermittlungseinheit aufgebaut werden muss, wobei hierzu die mobile Funkstation bzw. das Mobiltelefon neben die Nutzerkonsole gelegt werden soll.

Im dritten Schritt initiiert der Nutzer eine Verbindung mit der Vermittlungseinheit bzw. mit dem Server der Vermittlungseinheit. In dem Moment, in dem der Nutzer den Befehl gibt "Server konnektieren" wird die Anschlusskomponente gestartet, die beispielsweise über die Infrarotschnittstelle das interne Modem des Mobiltelefons anspricht. Das interne Modem stellt wiederum eine physikalische Wählverbindung in der Vermittlungseinheit bzw. zum Server bzw. Internet her. Steht die physikalische Verbindung, meldet sich die Anschlusskomponente beim Server an und fragt den Inhalt des Verzeichnis bzw. der Unterverzeichnisse ab, in denen die Softwareprogramme liegen und übermittelt diese Information an die Auswahlkomponente.

Im vierten Schritt erscheint der Inhalt des Softwareprogrammverzeichnisses in Listenform auf dem Display der Nutzerkonsole. Die Auswahlkomponente stellt den unmittelbaren Inhalt des Softwareprogrammverzeichnisses in Listenform dar, welche von dem Server bzw. der Vermittlungseinheit zugänglich ist. Der Nutzer kann nun ein Softwareprogramm bzw. -spiel auswählen und durch einen Tastendruck den Download starten.

Im fünften Schritt wird das Downloaden bzw. Übertragen des Softwareprogramms bzw. Spielprogramms durchgeführt.

Entscheidet sich der Nutzer für ein bestimmtes Softwareprogramm bzw. Spielprogramm aus der angezeigten Liste via Knopfdruck, so startet die Anschlusskomponente die Übertragung des entsprechenden Softwareprogramms bzw. der Softwareprogrammdaten. Die Anschlusskomponente leitet die eintreffenden Datenpakete in das erste Speicherelement des Telekommunikationssystems weiter. Sind alle Datenpakete angekommen, überprüft die Anschlusskomponente die Vollständigkeit der Datenpakete und generiert eine für die Nutzereinheit ausführbare Programmdatei im ersten Speicherelement. Danach wird die Verbindung mit der Vermittlungseinheit bzw. mit dem Server davon abgebrochen. Der entsprechende Befehl geht von der Anschlusskomponente an das Modem im Mobiltelefon bzw. mobilen Funkstation.

Im sechsten Schritt folgt die Statusmeldung und Aufforderung an den Nutzer. Die Auswahlkomponente informiert den Nutzer darüber, ob der Übertragungsvorgang erfolgreich war oder nicht. Bei einem Übertragungsfehler wird dem Nutzer angeboten, nochmals die Übertragung vorzunehmen. In diesem Fall wir Schritt 5 wieder ausgeführt. War die Übertragung erfolgreich wird dem Nutzer angeboten, das Softwareprogramm zu starten. Je nach Größe des Softwareprogramms war somit lediglich eine kurze Zeit die mobile Funkstation bzw. Mobiltelefons des Nutzer belegt.

Im siebten Schritt folgt das Starten des Softwareprogramms. Entscheidet sich der Nutzer für das Starten des Softwareprogramms bzw. Spielprogramms, wird die Emulatorkomponente initiiert, die vorgeschaltet wiederum die eigentliche Programmdatei startet, die dann von der Nutzerkonsole ausgeführt wird. Der Nutzer kann nunmehr das Softwareprogramm anwenden. Möchte der Nutzer ein anderes Softwareprogramm laden, muss er seine Nutzerkonsole kurz ausschalten. Durch Wiedereinschalten beginnt das Verfahren erneut bei Schritt 1.

Es ist jedoch verständlich, dass weitere Ausführungsformen des anmeldungsgemäßen Telekommunikationssystems möglich sind, ohne den Schutzbereich verlassen zu müssen.

So ist es beispielsweise verständlich, dass auch je nach Nutzervertrag zwischen dem das Mobiltelefon gehörendem Teilnehmer mit der Vermittlungseinheit, auch über einen gewissen längeren Zeitraum das Softwareprogramm in der Nutzerkonsole speicherbar ist und eine bestimmte Anzahl von Startmöglichkeiten dem Nutzer zur Verfügung gestellt wird. Mit der oben genannten Funktionsdarstellung wird deutlich, dass nunmehr die Möglichkeiten einer Vergebührung von etlichen Softwareprogrammen auf vielfältige Weise vorgenommen werden kann. Insbesondere ist eine Vergebührung nach der Anzahl von übertragenen Datenpakten möglich.

## Patentansprüche

1. Telekommunikationssystem, insbesondere zum Übertragen von Softwareprogrammen, bestehend aus
a) einer Vermittelungseinheit zum Bereitstellen eines Softwareprogramms,
b) zumindest einer der Vermittelungseinheit zugeordneten mobilen Funkstation, und
c) einer speziell für das Softwareprogramm konfigurierten Nutzerkonsole, wobei die Nutzerkonsole und die mobile Funkstation eine aufeinander abgestimmte Schnittstelle aufweisen, mittels derer das Softwareprogramm von der mobilen Funkstation an die Nutzerkonsole übertragbar ist,
wobei die Nutzerkonsole ein erstes Speicherelement in Form eines RAM-Moduls aufweist, in dem das Softwareprogramm temporär abspeicherbar ist und das derart ausgeführt ist, dass das Softwareprogramm aus dem ersten Speicherelement mit dem Ausschalten der Nutzerkonsole oder nach Nutzung einer bestimmten Anzahl von Startmöglichkeiten des Softwareprogramms gelöscht wird,
wobei die Nutzerkonsole ein zweites Speicherelement, vorzugsweise ein ROM-Modul, mit einem Betriebssoftwareprogramm aufweist, das eine Betriebskomponente, eine Auswahlkomponente, eine Verbindungskomponente, eine Emulatorkomponente sowie eine Programmkomponente umfasst, wobei die Auswahlkomponente derart ausgestaltet ist, Informationen über verfügbare Softwareprogramme anzuzeigen und virtuelle Schaltflächen für die Bestätigung der Übertragungsinitialisierung zu generieren, und die Verbindungskomponente derart ausgeführt ist, die Initiierung, Durchführung und Kontrolle der empfangenen Softwareprogrammdaten zwischen Vermittlungseinheit und mobiler Funkstation vorzunehmen und
wobei die Nutzerkonsole eine separierbare Einrichtung aufweist, welche das erste Speicherelement, das zweite Speicherelement und die Schnittstelle aufweist.

2. Telekommunikationssystem nach Anspruch 1, wobei die aufeinander abgestimmte Schnittstelle eine serielle Schnittstelle oder eine Infrarot-Schnittstelle ist.

3. Telekommunikationssystem nach einem der vorhergehenden Ansprüche, wobei die separierbare Einrichtung der Nutzerkonsole formgleich mit einer für den Austausch üblicherweise vorgesehenen Einschubkassette mit Softwareprogrammen der Nutzerkonsole ist.

4. Telekommunikationssystem nach einem der Ansprüche 1 bis 3, wobei die Nutzerkonsole oder die separierbare Einrichtung ein Verwaltungselement aufweist, welches mit einem dritten Speicherelement, vorzugsweise RAM-Modul, in Verbindung steht.

5. Telekommunikationssystem nach einem der vorhergehenden Ansprüche, wobei das Betriebssoftwareprogramm eine Betriebskomponente, eine Auswahlkomponente, eine Verbindungskomponente, eine Emulatorkomponente und/oder eine Programmkomponente enthält.

6. Telekommunikationssystem nach Anspruch 5, wobei die Betriebskomponente das erste Speicherelement und/oder die Schnittstelle verwaltet, die Auswahlkomponente das graphische Interface zum Nutzer darstellt und virtuelle Schaltflächen generiert, die Verbindungskomponente den Zugriff auf einen zentralen Server der Vermittelungseinheit ermöglicht und den Datentransfer des Softwareprogramms zwischen Vermittelungseinheit und mobiler Funkstation koordiniert, die Emulatorkomponente als Mittler zwischen dem Softwareprogramm und Nutzerkonsole fungiert, und/oder die Programmkomponente das Ausführen des Softwareprogramms verwaltet.

7. Telekommunikationssystem nach einem der Ansprüche 1 bis 6, wobei das Softwareprogramm ein Spieleprogramm und die Nutzerkonsole eine Spielekonsole ist.

8. Telekommunikationssystem nach einem der Ansprüche 1 bis 7, wobei die mobile Funkstation ein Mobiltelefon mit geeigneter Schnittstelle ist.

9. Verfahren zum Betreiben eines Telekommunikationssystems, insbesondere unter Verwendung des Telekommunikationssystems nach einem der Ansprüche 1 bis 8, welches die Schritte aufweist:
a) Bereitstellen eines Softwareprogramms, vorzugsweise in einer Vermittelungseinheit,
b) Bereitstellen einer der Vermittelungseinheit zugeordneten mobilen Funkstation,
c) Bereitstellen einer speziell für das Softwareprogramm konfigurierten Nutzerkonsole,
d) Übertragen des Softwareprogramms auf die Nutzerkonsole, wobei das Übertragen des Softwareprogramms durch Aufbau einer Verbindung zwischen der Vermittelungseinheit und der Funkstation erfolgt, und die Funkstation über eine Schnittstelle mit der Nutzerkonsole kommuniziert,
e) Laden des Softwareprogramms in ein erstes Speicherelement der Nutzerkonsole,
f) temporäres Speichern des Softwareprogramms in dem ersten Speicherelement der Nutzerkonsole,
g) Starten des Softwareprogramms durch ein Betriebssoftwareprogamm, welches in einem zweiten Speicherelement der Nutzerkonsole vorliegt, wobei das Betriebssoftwareprogramm eine Betriebskomponente, eine Auswahlkomponente, eine Verbindungskomponente, eine Emulatorkomponente sowie eine Programmkomponente umfasst, die Auswahlkomponente Informationen über verfügbare Softwareprogramme anzeigt und virtuelle Schaltflächen für die Bestätigung der Übertragungsinitialisierung generiert, und die Verbindungskomponente eine Initiierung, Durchführung und Kontrolle der empfangenen Softwareprogrammdaten zwischen Vermittlungseinheit und mobiler Funkstation vornimmt,
wobei die Nutzerkonsole eine separierbare Einrichtung aufweist, welche das erste Speicherelement, das zweite Speicherelement und die Schnittstelle aufweist und
h) Löschen des Softwareprogramms aus dem ersten Speicherelement mit dem Ausschalten der Nutzerkonsole oder nach Nutzung einer bestimmten Anzahl von Startmöglichkeiten des Softwareprogramms durch den Nutzer.

10. Verfahren nach Anspruch 9, wobei der Verbindungsaufbau zwischen Nutzerkonsole zur Vermittelungseinheit über die mobile Funkstation von der Nutzerkonsole initiiert wird.

11. Verfahren nach einem der Ansprüche 9 oder 10, wobei die separierbare Einrichtung als Einschubkassette ausgestaltet ist, um für die Inbetriebnahme des Systems mit einem ein fest installiertes Softwareprogramm enthaltenes Austauschmodul gewechselt zu werden.

12. Verfahren nach einem der Ansprüche 9 bis 11, wobei Kenngrössen des Softwareprogramms über ein Verwaltungselement, welches mit einem dritten Speicherelement, vorzugsweise RAM-Modul in Verbindung steht, in das dritte Speicherelement, vorzugsweise temporär, abspeichert.

13. Verfahren nach einem der Ansprüche 9 bis 12, wobei das Softwareprogramm ein Spieleprogramm ist und als Nutzerkonsole eine Spielekonsole verwendet wird.

14. Verwendung einer Einschubkassette zur Durchführung des Verfahrens nach einem der Ansprüche 9 bis 13 und/oder zur Verwendung in einem Telekommunikationssystem nach einem der Ansprüche 1 bis 8, bestehend aus einem ersten Speicherelement zum Speichern des Softwareprogramms, einem zweiten Speicherelement zum Speichern eines Betriebssoftwareprogramms, einer Schnittstelle zu der mobilen Funkstation und einer Verbindungsstelle zur Verbindung mit der Nutzerkonsole.

15. Einschubkassette nach Anspruch 14, wobei die Schnittstelle eine serielle Schnittstelle oder eine Infrarot-Schnittstelle ist.

16. Einschubkassette nach einem der Ansprüche 14 oder 15, wobei ferner ein Verwaltungselement mit einem dritten Speicherelement, vorzugsweise ein RAM Modul, zum Abspeichern von Kenngrössen des Softwareprogramms vorgesehen ist.

17. Einschubkassette nach einem der Ansprüche 14 bis 16, wobei das Softwareprogramms ein Spieleprogramm ist.

## Claims

1. A telecommunications system, particularly for transmitting software programs, consisting of
a) a switching unit for providing a software program,
b) at least one mobile radio station assigned to the switching unit, and
c) a user console configured especially for the software program, wherein the user console and the mobile radio station have an interface tailored to one another, by means of which the software program can be transmitted from the mobile radio station to the user console,
wherein the user console comprises a first memory element, in the form of a RAM module, in which the software program may be temporarily stored and which is configured in such a way that the software program is erased from the first memory element, when the user console is switched off or after the use of a specific number of start possibilities of the software program,
wherein the user console comprises a second memory element, preferably a ROM module, with an operating software program, which contains an operating component, a selection component, a connection component, an emulator component as well as a program component, wherein the selection component is configured in such a way as to display information about available software programs and to generate virtual buttons for the confirmation of the transmission initialization, and the connection component is configured in such a way as to effect initialization, execution and verification of the received software program data between switching unit and mobile radio station, and
wherein the user console comprises a separable device, which comprises the first memory element, the second memory element and the interface.

2. The telecommunications system according to claim 1, wherein the tailored interface is a serial interface or an infrared interface.

3. The telecommunications system according to one of the preceding claims, wherein the separable device of the user console has the same shape as a plug-in unit, usually provided for the exchange, with software programs of the user console.

4. The telecommunications system according to one of claims 1 to 3, wherein the user console or the separable device comprises a management element, which is in connection with a third memory element, preferably RAM module.

5. The telecommunications system according to one of the preceding claims, wherein the operating software program contains an operating component, a selection component, a connection component, an emulator component and/or a program component.

6. The telecommunications system according to claim 5, wherein the operating component manages the first memory element and/or the interface, the selection component represents the graphic interface to the user and generates virtual buttons, the connection component allows for access to a central server of the switching unit and coordinates the data transfer of the software program between the switching unit and the mobile radio station, the emulator component functions as an intermediary between the software program and the user console, and/or the program component manages the execution of the software program.

7. The telecommunications system according to one of claims 1 to 6, wherein the software program is a game program and the user console is a game console.

8. The telecommunications system according to one of claims 1 to 7, wherein the mobile radio station is a mobile phone with a suitable interface.

9. A method for operating a telecommunications system, particularly using the telecommunications system according to one of the claims 1 to 8, which comprises the steps:
a) providing a software program, preferably in a switching unit,
b) providing a mobile radio station assigned to the switching unit,
c) providing a user console configured especially for the software program,
d) transmitting the software program to the user console, wherein the transmission of the software program occurs through the establishing of a connection between the switching unit and the mobile radio station, and the radio station communicates with the user console via an interface,
e) loading the software program into a first memory element of the user console,
f) storing the software program temporarily in the first memory element of the user console,
g) starting the software program by an operating software program, which is present in a second memory element of the user console, wherein the operating software program includes an operating component, a selection component, a connection component, an emulator component as well as a program component, the selection component displays information about available software programs and generates virtual buttons for the confirmation of the transmission initialization, and the connection component effects an initialization, execution and verification of the received software program data between the switching unit and the mobile radio station,
wherein the user console comprises a separable device, which comprises the first memory element, the second memory element and the interface, and
h) erasing the software program from the first memory element, when the user console is switched off by the user or after the use of a specific number of start possibilities by the user.

10. The method according to claim 9, wherein the connection establishment between the user console to the switching unit is initiated via the mobile radio station from the user console.

11. The method according to one of claims 9 or 10, wherein the separable device is configured as a plug-in unit in order to be exchanged with an exchange module containing a fixedly installed software program for the initialization of the system.

12. The method according to one of claims 9 to 11, wherein parameters of the software program are stored, preferably temporarily, into the third memory element via a management element, which is in connection with a third memory element, preferably a RAM module.

13. The method according to one of claims 9 to 12, wherein the software program is a game program and a game console is used as the user console.

14. Use of a plug-in unit for performing the method according to one of claims 9 to 13 and/or for use in a telecommunications system according to one of claims 1 to 8, consisting of a first memory element for the storing the software program, a second memory element for storing an operating software program, an interface to the mobile radio station and a connection point for the connection with the user console.

15. Plug-in unit according to claim 14, wherein the interface is a serial interface or an infrared interface.

16. Plug-in unit according to one of claims 14 or 15, wherein further a management element with a third memory element, preferably a RAM module, for storing parameters of the software program, is provided.

17. Plug-in unit according to one of claims 14 to 16, wherein the software program is a game program.

## Revendications

1. Système de télécommunication, notamment pour la transmission de programmes logiciels, consistent en
a) une unité de commutation destinée à fournir un programme logiciel,
b) au moins une station radio mobile assignée à l'unité de commutation, et
c) une console utilisateur spécialement configurée pour le programme logiciel, la console utilisateur et la station radio mobile présentant une interface adaptée l'une à l'autre, au moyen de laquelle le programme logiciel est transmissible de la station radio mobile à la console utilisateur,
la console utilisateur présentant un premier élément de mémoire sous forme d'un module RAM, dans lequel le programme logiciel est temporairement mémorisable, et lequel est réalisé de manière à ce que le programme logiciel soit supprimé du premier élément de mémoire par déconnexion de la console utilisateur ou après l'utilisation d'un certain nombre de possibilités de démarrage du programme logiciel,
la console utilisateur présentant un deuxième élément de mémoire, de préférence un module ROM, doté d'un programme logiciel d'exploitation qui comprend un composant d'exploitation, un composant de sélection, un composant de connexion, un composant émulateur ainsi qu'un composant de programme, le composant de sélection étant réalisé de manière à afficher des informations sur des programmes logiciels disponibles et à générer des boutons de commande virtuels pour la confirmation de l'initialisation de la transmission, et le composant de connexion étant réalisé de manière à exécuter l'initiation, la réalisation et le contrôle des données du programme logiciel entre l'unité de commutation et la station radio mobile, et
la console utilisateur présentant un dispositif séparable, lequel présente le premier élément de mémoire, le deuxième élément de mémoire et l'interface.

2. Système de télécommunication selon la revendication 1, l'interface adaptée étant une interface sérielle ou une interface infrarouge.

3. Système de télécommunication selon l'une quelconque des revendications précédentes, le dispositif séparable de la console utilisateur étant de forme identique à une cassette insérable, usuellement prévue pour le remplacement, dotée de programmes logiciels de la console utilisateur.

4. Système de télécommunication selon l'une quelconque des revendications 1 à 3, la console utilisateur ou le dispositif séparable présentant un élément de gestion, lequel est en liaison avec un troisième élément de mémoire, de préférence un module RAM.

5. Système de télécommunication selon l'une quelconque des revendications précédentes, le programme logiciel d'exploitation comprenant un composant d'exploitation, un composant de sélection, un composant de connexion, un composant émulateur et/ou un composant de programme.

6. Système de télécommunication selon la revendication 5, le composant d'exploitation gérant le premier élément de mémoire et/ou l'interface, le composant de sélection représentant l'interface graphique vers l'utilisateur et générant des boutons de commande virtuels, le composant de connexion permettant l'accès à un serveur central de l'unité de commutation et coordonnant le transfert de données du programme logiciel entre l'unité de commutation et la station radio mobile, le composant émulateur servant d'intermédiaire entre le programme logiciel et la console utilisateur et/ou le composant de programme gérant l'exécution du programme logiciel.

7. Système de télécommunication selon l'une quelconque des revendications 1 à 6, le programme logiciel étant un programme de jeux et la console utilisateur étant une console de jeux.

8. Système de télécommunication selon l'une quelconque des revendications 1 à 7, la station radio mobile étant un téléphone mobile doté d'une interface appropriée.

9. Procédé de fonctionnement d'un système de télécommunication, notamment avec utilisation du système de télécommunication selon l'une quelconque des revendications 1 à 8, lequel comprend les étapes :
a) fourniture d'un programme logiciel, de préférence dans une unité de commutation,
b) fourniture d'une station radio mobile assignée à l'unité de commutation,
c) fourniture d'une console utilisateur spécialement configurée pour le programme logiciel,
d) transmission du programme logiciel sur la console utilisateur, la transmission du programme logiciel étant réalisée par établissement d'une liaison entre l'unité de commutation et la station radio, et la station radio communiquant avec la console utilisateur par l'intermédiaire d'une interface,
e) téléchargement du programme logiciel dans un premier élément de mémoire de la console utilisateur,
f) mémorisation temporaire du programme logiciel dans le premier élément de mémoire de la console utilisateur,
g) démarrage du programme logiciel au moyen d'un programme logiciel d'exploitation, lequel est présent dans un deuxième élément de mémoire de la console utilisateur, le programme logiciel d'exploitation comprenant un composant d'exploitation, un composant de sélection, un composant de connexion, un composant émulateur ainsi qu'un composant de programme, le composant de sélection affichant des informations sur des programmes logiciels disponibles et générant des boutons de commande virtuels pour la confirmation de l'initialisation de la transmission, et le composant de connexion exécutant une initiation, une réalisation et un contrôle des données du programme logiciel reçues entre l'unité de commutation et la station radio mobile,
la console utilisateur présentant un dispositif séparable, lequel présente le premier élément de mémoire, le deuxième élément de mémoire et l'interface, et
h) suppression du programme logiciel du premier élément de mémoire avec déconnexion de la console utilisateur ou après l'utilisation d'un nombre déterminé de possibilités de démarrage du programme logiciel par l'utilisateur.

10. Procédé selon la revendication 9, l'établissement de la liaison entre la console utilisateur vers l'unité de commutation étant initié par la console utilisateur par l'intermédiaire de la station radio mobile.

11. Procédé selon l'une quelconque des revendications 9 ou 10, le dispositif séparable étant conçu comme cassette insérable pour, dans le but de la mise en service du système, être échangé par un module d'échange contenant un programme logiciel installé de manière fixe.

12. Procédé selon l'une quelconque des revendications 9 à 11, des grandeurs caractéristiques du programme logiciel étant mémorisées dans un troisième élément de mémoire, notamment temporairement, par l'intermédiaire d'un élément de gestion, lequel est en liaison avec le troisième élément de mémoire, de préférence un module RAM.

13. Procédé selon l'une quelconque des revendications 9 à 12, le programme logiciel étant un programme de jeux et une console de jeux étant utilisée comme console utilisateur.

14. Utilisation d'une unité insérable pour la réalisation du procédé selon l'une quelconque des revendications 9 à 13 et/ou pour l'utilisation dans un système de télécommunication selon l'une quelconque des revendications 1 à 8, consistant en un premier élément de mémoire destiné à mémoriser le programme logiciel, un deuxième élément de mémoire destiné à mémoriser un programme logiciel d'exploitation, une interface vers la station radio mobile et un point de liaison pour la liaison avec la console utilisateur.

15. Unité insérable selon la revendication 14, l'interface étant une interface sérielle ou une interface infrarouge.

16. Unité insérable selon l'une quelconque des revendications 14 ou 15, un élément de gestion étant en outre prévu, ayant d'un troisième élément de mémoire, de préférence un module RAM pour mémoriser des grandeurs caractéristiques du programme logiciel.

17. Unité insérable selon l'une quelconque des revendications 14 à 16, le programme logiciel étant un programme de jeux.
